(19)

Europäisches
Patentamt

European
Patent Office

Office européen
des brevets

(11) **EP 4 683 201 A1**

(12) **EUROPEAN PATENT APPLICATION**
published in accordance with Art. 153(4) EPC

(43) Date of publication:
**21.01.2026 Bulletin 2026/04**

(21) Application number: **23927511.8**

(22) Date of filing: **16.03.2023**

(51) International Patent Classification (IPC):
**H02M 7/48** *(2007.01)*

(52) Cooperative Patent Classification (CPC):
**H02M 7/48**

(86) International application number:
**PCT/JP2023/010301**

(87) International publication number:
**WO 2024/189892 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Mitsubishi Electric Corporation
Tokyo 100-8310 (JP)**

(72) Inventors:
• **TOI, Takato**
**Tokyo 100-8310 (JP)**
• **MUKUNOKI, Kaho**
**Tokyo 100-8310 (JP)**
• **OISHI, Masayuki**
**Tokyo 100-8310 (JP)**

(74) Representative: **Hoffmann Eitle
Patent- und Rechtsanwälte PartmbB
Arabellastraße 30
81925 München (DE)**

(54) **POWER CONVERSION DEVICE**

(57)     A power conversion device (100) includes a power converter (6) and a control device (5). The control device (5) includes: an active power control unit (40) to generate a reference phase of an output AC voltage, based on an active power detection value of an AC system (2) and an active power command value; a capacitor voltage control unit (45) to generate a reference phase correction value for correcting the reference phase, based on a capacitor voltage command value and a voltage of a capacitor included in the power converter; a voltage command generation unit (50) to gen- erate a voltage command value for controlling first active power transmitted and received between a DC circuit (4) and the power converter (6) and controlling second active power transmitted and received between the AC system (2) and the power converter (6), based on an output DC current, a DC current command value, a reference voltage command value of the output AC voltage, the reference phase, and the reference phase correction value; and a signal generation unit (58) to generate a control signal based on the voltage command value.

FIG.4

**Description**

TECHNICAL FIELD

The present disclosure relates to a power conversion device.

BACKGROUND ART

In recent years, many dispersed-type power sources using renewable energy such as solar power generation facilities have been introduced into power systems. It is often the case that a dispersed-type power source is interconnected to a power system via a power converter. Accordingly, if more dispersed-type power sources are interconnected to a power system, the ratio of synchronous power generators interconnected to the power system decreases, and inertial energy in the power system decreases. Thus, there has been proposed virtual synchronous power generator control that compensates for decreased inertial energy by causing a power converter to perform a behavior similar to that of a synchronous power generator.

WO2021/213655 (PTL 1) discloses a control device for a voltage source converter that operates as a virtual synchronous generator. The control device obtains a power level of the voltage source converter, processes the obtained power level using a differential equation of an angular velocity of the virtual synchronous generator to obtain a control contribution, and outputs a phase angle of a physical quantity used to control the voltage source converter based on the control contribution. The control device monitors the ability of the voltage source converter that operates as the virtual synchronous generator, and adjusts the control contribution based on the monitored ability.

CITATION LIST

PATENT LITERATURE

PTL 1: WO2021/213655

SUMMARY OF INVENTION

TECHNICAL PROBLEM

In a power converter that performs alternating current (AC) to direct current (DC) conversion, it is necessary to appropriately control not only active power on an AC side which is transmitted and received between an AC system and the power converter, but also active power on a DC side which is transmitted and received between a DC circuit (for example, a DC system, a power storage device, or the like) and the power converter. This is because, when the active power on the AC side and the active power on the DC side are not balanced, there is a possibility that a voltage of a capacitor included in the power converter may deviate from an allowable range, and the power converter may stop.

PTL 1 discloses that the control device for the voltage source converter receives a measured voltage of a power grid and a desired voltage of a power system, generates a virtual synchronous generator voltage based on these two voltages, and generates the phase angle by virtual synchronous generator control. Accordingly, it is considered that active power on an AC side is controlled by the control device. On the other hand, since PTL 1 neither discloses nor suggests controlling active power on a DC side, there is a possibility that the voltage source converter cannot be stably operated.

An object in an aspect of the present disclosure is to provide a power conversion device capable of continuing a stable operation by appropriately controlling active power on a DC side and active power on an AC side.

SOLUTION TO PROBLEM

A power conversion device according to an embodiment includes a power converter to perform power conversion between an AC system and a DC circuit, and a control device to control the power converter. The control device includes: an active power control unit to generate a reference phase of an output AC voltage of the power converter, based on an active power detection value of the AC system, an active power command value, and a system frequency of the AC system; a capacitor voltage control unit to generate a reference phase correction value for correcting the reference phase, based on a capacitor voltage command value and a voltage of a capacitor included in the power converter; a voltage command generation unit to generate a voltage command value for controlling first active power transmitted and received between the DC circuit and the power converter and controlling second active power transmitted and received between the AC system and the power converter, based on an output DC current of the power converter, a DC current command value, a reference voltage command value of the output AC voltage of the power converter, the reference phase, and the reference phase correction value; and a signal generation unit to generate a control signal for the power converter based on the voltage command value.

ADVANTAGEOUS EFFECTS OF INVENTION

With the power conversion device according to the present disclosure, it is possible to continue a stable operation by appropriately controlling active power on an AC side and active power on a DC side.

BRIEF DESCRIPTION OF DRAWINGS

Fig. 1 is a diagram showing an exemplary configuration of a power conversion device.
Fig. 2 is a circuit diagram showing an example of a converter cell.
Fig. 3 is a block diagram showing an example of a hardware configuration of a control device.
Fig. 4 is a diagram showing an example of a functional configuration of a control device according to a first embodiment.
Fig. 5 is a diagram showing a first exemplary configuration of an active power control unit according to the first embodiment.
Fig. 6 is a diagram showing a second exemplary configuration of the active power control unit according to the first embodiment.
Fig. 7 is a diagram showing an exemplary configuration of a reference voltage command generation unit.
Fig. 8 is a diagram showing an example of a functional configuration of a control device according to a second embodiment.
Fig. 9 is a diagram showing a first exemplary configuration of an active power control unit according to the second embodiment.
Fig. 10 is a diagram showing a second exemplary configuration of the active power control unit according to the second embodiment.
Fig. 11 is a diagram showing an exemplary configuration of a phase transformation unit according to the second embodiment.
Fig. 12 is a diagram for illustrating a system of conversion from a reference phase correction value to a DC current command value.
Fig. 13 is a diagram showing an example of a functional configuration of a control device according to a third embodiment.
Fig. 14 is a diagram showing a first exemplary configuration of an active power control unit according to the third embodiment.
Fig. 15 is a diagram showing a second exemplary configuration of the active power control unit according to the third embodiment.

DESCRIPTION OF EMBODIMENTS

Hereinafter, the present embodiment will be described with reference to the drawings. In the description below, identical parts will be designated by the same reference numerals. Since their names and functions are also the same, detailed description thereof will not be repeated.

[Configuration as Basis of Each Embodiment]

<Overall Configuration>

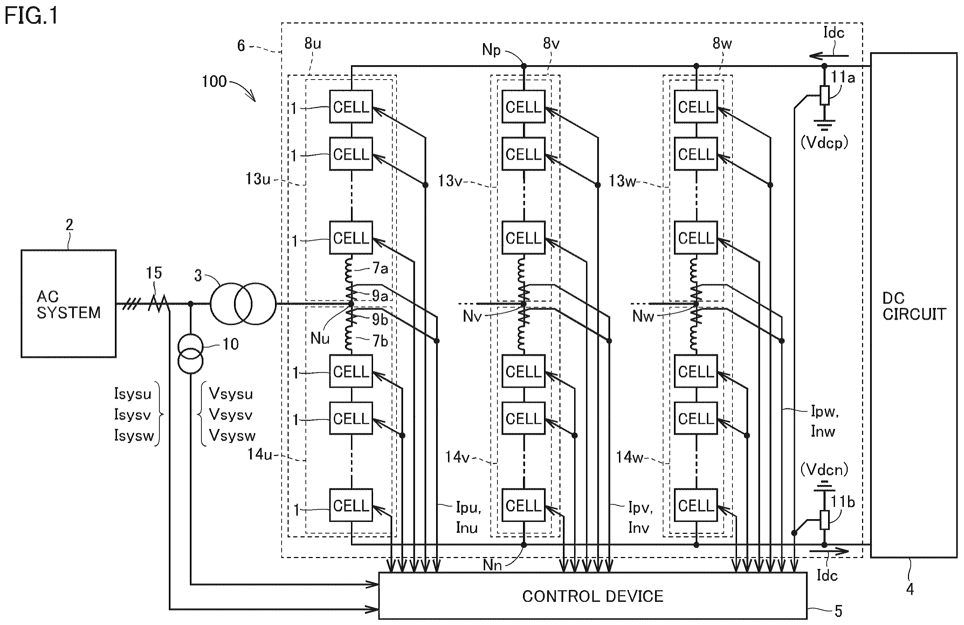

Fig. 1 is a diagram showing an exemplary configuration of a power conversion device 100. Referring to Fig. 1, power conversion device 100 is connected between an AC system 2 and a DC circuit 4. DC circuit 4 includes a power storage element connected to a DC terminal of a power converter 6. The power storage element is a power storage device including an electric double layer capacitor or a storage battery such as a lithium ion battery, for example. Alternatively, DC circuit 4 includes a DC terminal of another power converter connected to the DC terminal of power converter 6. In this case, the two power converters are coupled to constitute a Back To Back (BTB) system for connecting AC power systems having different rated frequencies or the like.
Power conversion device 100 includes self-commutated power converter 6, and a control device 5 to control power converter 6. Typically, power converter 6 is constituted by a modular multilevel converter (MMC) including a plurality of converter cells (corresponding to "cells" in Fig. 1) 1 connected in series with each other. It should be noted that a "converter cell" is also referred to as a "sub module" or a "unit converter".

Power converter 6 is a power converter that is connected to DC circuit 4 and performs power conversion between DC circuit 4 and AC system 2. Specifically, power converter 6 converts DC power outputted from DC circuit 4 into AC power, and outputs the AC power to AC system 2 via a voltage transformer 3. Further, power converter 6 converts AC power from AC system 2 into DC power, and outputs the DC power to DC circuit 4. Power converter 6 is controlled by control device 5, as a voltage source that can output an AC voltage having a voltage phase and a voltage amplitude different from those of a system voltage.

In the example in Fig. 1, power converter 6 includes a plurality of arms for each phase of AC system 2. Specifically, power converter 6 includes a plurality of leg circuits 8u, 8v, and 8w (hereinafter described as a "leg circuit 8" when they are collectively referred to or any one of them is referred to) connected in parallel with each other between a positive-side DC terminal (that is, a high potential-side DC terminal) Np and a negative-side DC terminal (that is, a low potential-side DC terminal) Nn.

Leg circuit 8 is provided for each of a plurality of phases constituting an alternating current. Leg circuit 8 is connected between AC system 2 and DC circuit 4, and performs power conversion between both circuits. Fig. 1 shows a case where AC system 2 is a three-phase AC system, and three leg circuits 8u, 8v, and 8w are provided corresponding to a u phase, a v phase, and a w phase, respectively. It should be noted that, when AC system 2 is a single-phase AC system, two leg circuits are provided.

AC terminals Nu, Nv, and Nw provided to leg circuits 8u, 8v, and 8w, respectively, are connected to AC system 2 via voltage transformer 3. AC system 2 is, for example, an AC power system including an AC power source and the like. In

Fig. 1, for ease of illustration, connection between AC terminal Nv, Nw and voltage transformer 3 is not shown. The DC terminals (that is, positive-side DC terminal Np and negative-side DC terminal Nn) provided in common to leg circuits 8 are connected to DC circuit 4.

Leg circuits 8u, 8v, and 8w may be configured to be connected to AC system 2 via an interconnection reactor, instead of using voltage transformer 3 in Fig. 1. Furthermore, leg circuits 8u, 8v, and 8w may be respectively provided with primary windings instead of AC terminals Nu, Nv, and Nw, and leg circuits 8u, 8v, and 8w may be AC-connected to voltage transformer 3 or the interconnection reactor via secondary windings magnetically coupled to the primary windings. In this case, the primary windings may be reactors 7a and 7b described below. That is, leg circuits 8 are electrically (that is, DC- or AC-) connected to AC system 2 via connection portions provided to leg circuits 8u, 8v, and 8w, such as AC terminals Nu, Nv, and Nw or the primary windings described above.

Leg circuit 8u is divided into a positive-side arm 13u extending from positive-side DC terminal Np to AC terminal Nu and a negative-side arm 14u extending from negative-side DC terminal Nn to AC terminal Nu. A connection point between positive-side arm 13u and negative-side arm 14u is connected, as AC terminal Nu, with voltage transformer 3. Positive-side DC terminal Np and negative-side DC terminal Nn are connected to DC circuit 4. Leg circuit 8v includes a positive-side arm 13v and a negative-side arm 14v, and leg circuit 8w includes a positive-side arm 13w and a negative-side arm 14w. Since leg circuits 8v and 8w have the same configuration as that of leg circuit 8u, leg circuit 8u will be described below as a representative.

In leg circuit 8u, positive-side arm 13u includes a plurality of converter cells 1 cascade-connected to each other, and reactor 7a. The plurality of converter cells 1 and reactor 7a are connected in series with each other. Negative-side arm 14u includes a plurality of converter cells 1 cascade-connected to each other, and reactor 7b. The plurality of converter cells 1 and reactor 7b are connected in series with each other.

Reactor 7a may be inserted at any position in positive-side arm 13u, and reactor 7b may be inserted at any position in negative-side arm 14u. A plurality of reactors 7a and a plurality of reactors 7b may be provided. The reactors may have inductance values different from each other. Furthermore, only reactor 7a in positive-side arm 13u or only reactor 7b in negative-side arm 14u may be provided.

Power conversion device 100 further includes an AC voltage detector 10, an AC current detector 15, DC voltage detectors 11a and 11b, and arm current detectors 9a and 9b provided to each leg circuit 8. These detectors each measure an electrical quantity (that is, a current or a voltage) used to control power conversion device 100. Signals detected by these detectors are inputted to control device 5.

AC voltage detector 10 detects three-phase AC voltages Vsysu, Vsysv, and Vsysw (hereinafter also collectively referred to as an "AC voltage Vsys"). AC current detector 15 three-phase AC currents Isysu, Isysv, and Isysw (hereinafter also collectively referred to as an "AC current Isys") of AC system 2. DC voltage detector 11a detects a DC voltage measured value Vdcp of positive-side DC terminal Np connected to DC circuit 4. DC voltage detector 11b detects a DC voltage measured value Vdcn of negative-side DC terminal Nn connected to DC circuit 4.

Arm current detectors 9a and 9b provided to leg circuit 8u for the u phase detect a positive-side arm current measured value Iup flowing to positive-side arm 13u and a negative-side arm current measured value Iun flowing to negative-side arm 14u, respectively. Arm current detectors 9a and 9b provided to leg circuit 8v for the v phase detect a positive-side arm current measured value Ivp and a negative-side arm current measured value Ivn, respectively. Arm current detectors 9a and 9b provided to leg circuit 8w for the w phase detect a positive-side arm current measured value Iwp and a negative-side arm current measured value Iwn, respectively.

A DC current outputted from power converter 6 (hereinafter also referred to as an "output DC current Idc") is detected using a DC current detector (not shown). Output DC current Idc corresponds to a DC current value flowing between power converter 6 and DC circuit 4. It should be noted that output DC current Idc may be computed as shown in the following equation (1), using positive-side arm current measured values Iup, Ivp, and Iwp and negative-side arm current measured values Iun, Ivn, and Iwn.

$$Idc = (Ipu+Ipv+Ipw+Inu+Inv+Inw)/2 \ldots (1)$$

<Exemplary Configuration of Converter Cell>

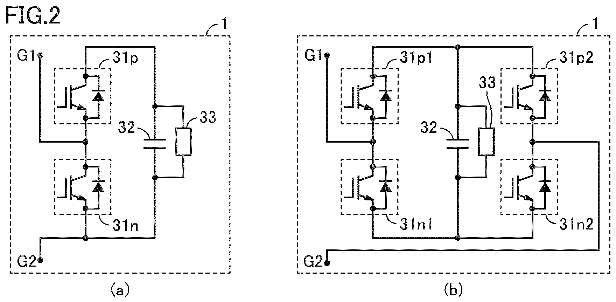

Fig. 2 is a circuit diagram showing an example of converter cell 1. Converter cell 1 shown in Fig. 2(a) has a circuit configuration called a half-bridge configuration. This converter cell 1 includes a series body formed by connecting two switching elements 31p and 31n in series, a capacitor 32 as a power storage element, and a voltage detector 33. The series body and capacitor 32 are connected in parallel. Voltage detector 33 detects a voltage Vcap, which is a voltage across capacitor 32.

Converter cell 1 shown in Fig. 2(b) has a circuit configuration called a full-bridge configuration. This converter cell 1 includes a first series body formed by connecting two switching elements 31p1 and 31n1 in series, a second series body formed by connecting two switching elements 31p2 and 31n2 in series, capacitor 32, and voltage detector 33. The first series body, the second series body, and capacitor 32 are connected in parallel. Voltage detector 33 detects voltage Vcap.

Two switching elements 31p and 31n in Fig. 2(a) and four switching elements 31p1, 31n1, 31p2, and 31n2 in Fig. 2(b) are each constituted, for example, by connecting a freewheeling diode in anti-parallel with a self-commutated semiconductor switching element such as an insulated gate bipolar transistor (IGBT) or a metal oxide semiconductor field-effect transistor (MOSFET). Further, in Fig. 2(a) and Fig. 2(b), a capacitor such as a film capacitor is mainly used as capacitor 32.

In the following description, switching elements 31p, 31n, 31p1, 31n1, 31p2, and 31n2 are also collectively referred to as a switching element 31. Further, on/off of the semiconductor switching element within switching element 31 is simply referred to as "on/off of switching element 31".

Referring to Fig. 2(a), both terminals of switching element 31n are referred to as input/output terminals G1 and G2. By a switching operation of switching elements 31p and 31n, the voltage across capacitor 32 and a zero voltage are outputted. For example, when switching element 31p is turned on and switching element 31n is turned off, the voltage across capacitor 32 is outputted. When switching element 31p is turned off and switching element 31n is turned on, the zero voltage is outputted.

Next, referring to Fig. 2(b), a midpoint between switching element 31p1 and switching element 31n1 and a midpoint between switching element 31p2 and switching element 31n2 are respectively referred to as input/output terminals G1 and G2 of converter cell 1. Converter cell 1 shown in Fig. 2(b) outputs a positive voltage or a zero voltage by turning on switching element 31n2, turning off switching element 31p2, and alternately turning on switching elements 31p1 and 31n1. Further, converter cell 1 shown in Fig. 2(b) can output the zero voltage or a negative voltage by turning off switching element 31n2, turning on switching element 31p2, and alternately turning on switching elements 31p1 and 31n1.

In the present embodiment, converter cell 1 may have the configuration of a half-bridge cell shown in Fig. 2(a), or the full-bridge configuration shown in Fig. 2(b). Further, a converter cell having a configuration other than those described above may be used, for example, a converter cell having a circuit configuration called a 1.5 half-bridge configuration applied thereto, in which switching element 31p2 in Fig. 2(b) is replaced by a diode only.

<Exemplary Hardware Configuration of Control Device>

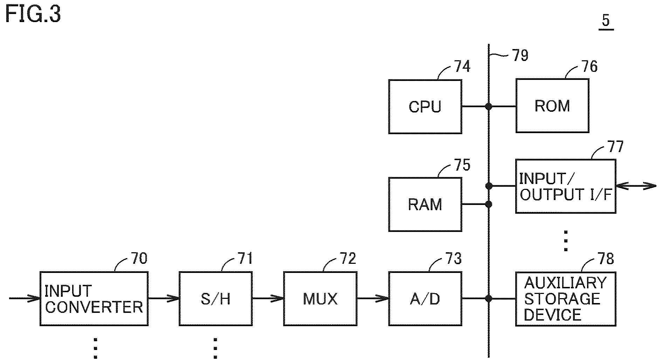

Fig. 3 is a block diagram showing an example of a hardware configuration of control device 5. Control device 5 in the case of Fig. 3 is constituted based on a computer. Referring to Fig. 3, control device 5 includes one or more input converters 70, one or more sample hold (S/H) circuits 71, a multiplexer (MUX) 72, and an A/D converter 73. Furthermore, control device 5 includes one or more central processing unit (CPU) 74, a random access memory (RAM) 75, and a read only memory (ROM) 76. Furthermore, control device 5 includes one or more input/output interfaces 77, an auxiliary storage device 78, and a bus 79 that mutually connects the components described above.

Input converter 70 includes an auxiliary transformer for each input channel. Each auxiliary transformer converts a detection signal detected by each electrical quantity detector in Fig. 1 into a signal having a voltage level suitable for subsequent signal processing.

Sample hold circuit 71 is provided for each input converter 70. Sample hold circuit 71 samples a signal indicating an electrical quantity received from corresponding input converter 70 using a specified sampling frequency, and holds the signal.

Multiplexer 72 sequentially selects the signals held in a plurality of sample hold circuits 71. A/D converter 73 converts a signal selected by multiplexer 72 into a digital value. It should be noted that A/D conversion may be performed in parallel on detection signals of a plurality of input channels, by providing a plurality of A/D converters 73.

CPU 74 controls entire control device 5, and performs computation processing according to a program. RAM 75 as a volatile memory and ROM 76 as a nonvolatile memory are used as main storages for CPU 74. ROM 76 stores programs, set values for signal processing, and the like. Auxiliary storage device 78 is a nonvolatile memory having a capacity larger than that of ROM 76, and stores programs, data of electrical quantity detection values, and the like.

Input/output interface 77 is an interface circuit in communicating between CPU 74 and an external device.

It should be noted that at least a part of control device 5 may be constituted using a circuit such as a field programmable gate array (FPGA) and an application specific integrated circuit (ASIC). Alternatively, at least a part of control device 5 can also be constituted by an analog circuit.

Hereinafter, first to third embodiments will be specifically described.

First Embodiment.

<Functional Configuration of Control Device>

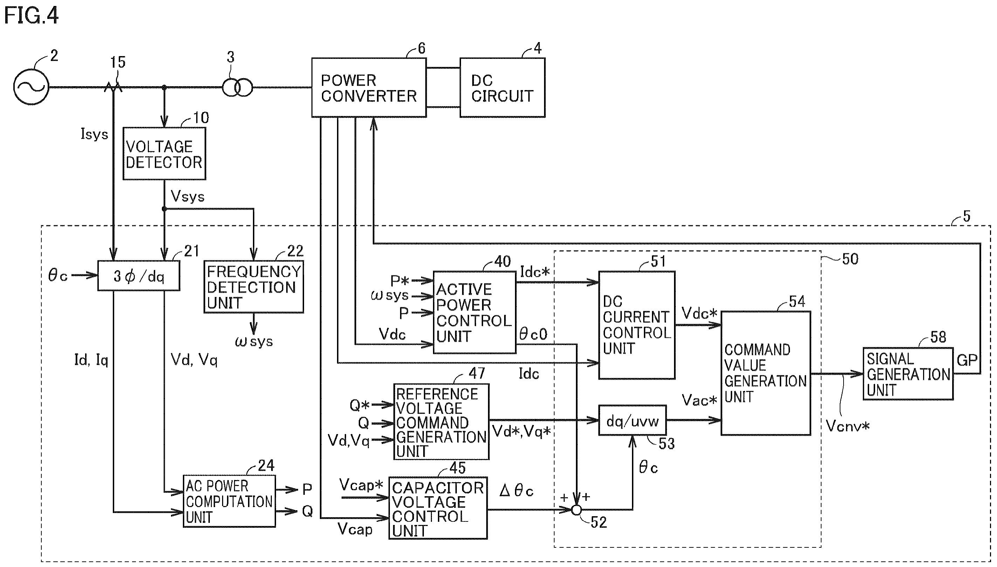

Fig. 4 is a diagram showing an example of a functional configuration of control device 5 according to the first embodiment. Referring to Fig. 4, control device 5 includes a coordinate transformation unit 21, a frequency detection unit 22, an AC power computation unit 24, an active power control unit 40, a capacitor voltage control unit 45, a reference voltage command generation unit 47, a voltage command generation unit 50, and a signal generation unit 58. Each of these functions is implemented by processing circuitry. The processing circuitry may be dedicated hardware, or may be a CPU that executes a program stored in an internal memory of control device 5. When the processing circuitry is dedicated hardware, the processing circuitry is constituted by an FPGA, an ASIC, a combination thereof, or the like, for example.

Coordinate transformation unit 21 performs three-phase/two-phase transformation on AC currents Isysu, Isysv, and Isysw using a reference phase $\theta c$, to compute a d-axis current Id and a q-axis current Iq. Further, coordinate transformation unit 21 performs three-phase/two-phase transformation on AC voltages Vsysu, Vsysv, and Vsysw using reference phase $\theta c$, to compute a d-axis voltage Vd and a q-axis voltage Vq.

Frequency detection unit 22 detects a system angular frequency $\omega sys$ of AC voltages Vsysu, Vsysv, and Vsysw.

AC power computation unit 24 computes active power P and reactive power Q of AC system 2, based on d-axis current Id, q-axis current Iq, d-axis voltage Vd, and q-axis voltage Vq. Active power P and reactive power Q respectively correspond to a detection value of active power and a detection value of reactive power outputted from power converter 6 to AC system 2. Accordingly, in the following description, active power P and reactive power Q described above are also respectively described as active power detection value P and reactive power detection value Q of AC system 2.

Active power control unit 40 generates a reference phase $\theta c0$ of an AC voltage outputted from power converter 6 (hereinafter also simply referred to as an "output AC voltage"), based on active power detection value P, an active power command value P*, and system angular frequency $\omega sys$ of AC system 2. Active power command value P* is, for example, a command value in response to a request from a higher-level device, a command value set by a system operator, or a command value as a frequency adjustment amount corresponding to governor-free operation of a synchronous power generator when the frequency of AC system 2 fluctuates.

Further, active power control unit 40 generates a DC current command value Idc*, which is a command value for a DC current outputted from power converter 6, based on active power detection value P and an output DC voltage Vdc of power converter 6. Output DC voltage Vdc is a DC voltage between positive-side DC terminal Np and negative-side DC terminal Nn, and is obtained from DC voltage measured values Vdcp and Vdcn detected by DC voltage detectors 11a and 11b. Specifically, output DC voltage Vdc is obtained as "Vdc = Vdcp-Vdcn".

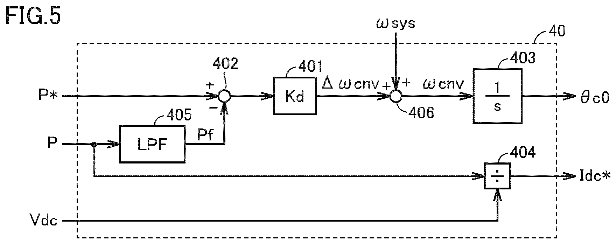

Fig. 5 is a diagram showing a first exemplary configuration of active power control unit 40 according to the first embodiment. Referring to Fig. 5, active power control unit 40 according to the first exemplary configuration generates reference phase $\theta c0$ by a droop control method, based on active power detection value P, active power command value P*, and system angular frequency $\omega sys$ of AC system 2. Specifically, active power control unit 40 according to the first exemplary configuration includes a proportioner 401, a subtractor 402, an integrator 403, a divider 404, a low pass filter 405, and an adder 406.

Low pass filter 405 outputs a value Pf obtained by removing a high frequency component of active power detection value P. Low pass filter 405 is a first-order lag element or the like, for example. Subtractor 402 outputs a difference between active power command value P* and value Pf obtained by removing the high frequency component of the active power (that is, P*-Pf). It should be noted that, when AC power computation unit 24 computes active power detection value P using a low pass filter, low pass filter 405 may not be provided.

Proportioner 401 outputs a multiplication value "Kd×(P*-Pf)" obtained by multiplying an output value of subtracter 402 by a coefficient Kd. Multiplication value "Kd×(P*-Pf)" is an angular frequency $\Delta\omega$cnv for correcting system angular frequency $\omega$sys. Coefficient Kd is a coefficient indicating a gradient of frequency droop characteristics.

Adder 406 outputs an angular frequency $\omega$cnv, which is a value obtained by adding angular frequency $\Delta\omega$cnv to system frequency $\omega$sys, to integrator 403. Integrator 403 time-integrates an output value of adder 406 to generate reference phase $\theta$c0. Divider 404 divides active power detection value P by output DC voltage Vdc to generate DC current command value Idc*.

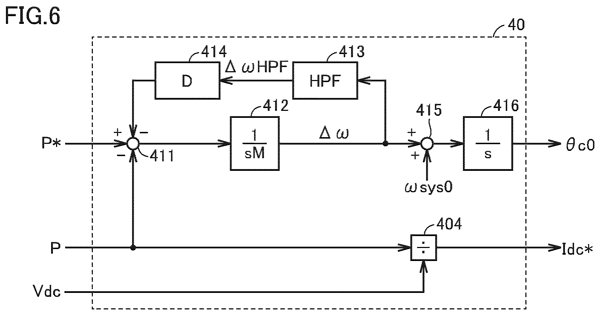

Fig. 6 is a diagram showing a second exemplary configuration of active power control unit 40 according to the first embodiment. Referring to Fig. 6, active power control unit 40 according to the second exemplary configuration generates reference phase $\theta$c0 by simulating characteristics of the synchronous power generator based on active power detection value P and active power command value P*. Specifically, active power control unit 40 according to the second exemplary configuration includes divider 404, an adder-subtracter 411, an integrator 412, a high pass filter 413, a proportioner 414, an adder 415, and an integrator 416. The method of generating DC current command value Idc* by divider 404 is the same as that described in Fig. 5.

Integrator 412 time-integrates an output value of adder-subtractor 411 to output an angular frequency deviation $\Delta\omega$. In Fig. 6, "M" in integrator 412 is an inertia constant of the synchronous power generator. Angular frequency deviation $\Delta\omega$ outputted by integrator 412 corresponds to a difference between an angular frequency of a rotor in a virtual synchronous power generator and a reference angular frequency $\omega$sys0. Reference angular frequency $\omega$sys0 is an angular frequency of a reference frequency (for example, 50 Hz or 60 Hz) of power in AC system 2.

High pass filter 413 performs high pass filtering on angular frequency deviation $\Delta\omega$, and outputs it to proportioner 414. Proportioner 414 outputs a multiplication value "D×$\Delta\omega$" obtained by multiplying angular frequency deviation $\Delta\omega$ subjected to the high pass filtering, by a damping constant D.

Adder-subtractor 411 outputs a value obtained by subtracting multiplication value "D×$\Delta\omega$" from a deviation $\Delta$P (= P*-P) between active power detection value P and active power command value P*, to integrator 412. Integrator 412 time-integrates the output value of adder-subtractor 411. Thereby, a damping force of the synchronous power generator in control of power converter 6 is simulated.

Adder 415 adds angular frequency deviation $\Delta\omega$ and reference angular frequency $\omega$sys0 to output an angular frequency $\omega$ (= $\Delta\omega$+$\omega$sys0). Integrator 416 time-integrates angular frequency $\omega$ to generate reference phase $\theta$c0.

Referring again to Fig. 4, capacitor voltage control unit 45 generates a reference phase correction value $\Delta\theta$c for correcting reference phase $\theta$c0, based on a capacitor voltage command value Vcap* and voltage Vcap of capacitors included in power converter 6. Specifically, capacitor voltage command value Vcap* is a command value given for a voltage average value of all capacitors included in power converter 6. Capacitor voltage control unit 45 generates reference phase correction value $\Delta\theta$c such that the voltage average value of all the capacitors follows capacitor voltage command value Vcap*. Capacitor voltage control unit 45 may be constituted as a PI controller, a PID controller, or another controller used for feedback control, for example.

Reference voltage command generation unit 47 generates reference voltage command values Vd* and Vq*, based on d-axis voltage Vd, q-axis voltage Vq, reactive power detection value Q, and a reactive power command value Q*.

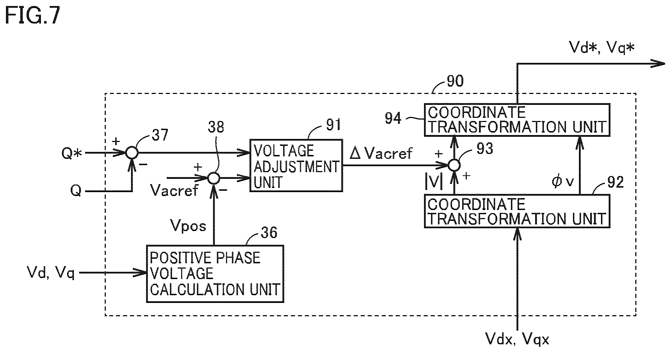

Fig. 7 is a diagram showing an exemplary configuration of reference voltage command generation unit 47. Referring to Fig. 7, reference voltage command generation unit 47 includes a positive phase voltage calculation unit 36, subtractors 37 and 38, a voltage adjustment unit 91, coordinate transformation units 92 and 94, and an adder 93.

Positive phase voltage calculation unit 36 calculates a positive phase voltage Vpos based on d-axis voltage Vd and q-axis voltage Vq. Subtractor 37 calculates a deviation $\Delta$Q (= Q*-Q) between reactive power command value Q* and reactive power detection value Q. Subtractor 38 calculates a deviation $\Delta$Vpos (= Vacref-Vpos) between a system voltage command value Vacref and positive phase voltage Vpos.

Voltage adjustment unit 91 selects either an automatic reactive power adjustment mode or an automatic voltage adjustment mode, and generates a voltage amplitude adjustment amount $\Delta$Vacref based on the selected mode. Specifically, when voltage adjustment unit 91 selects the automatic reactive power adjustment mode, voltage adjustment unit 91 generates voltage amplitude adjustment amount $\Delta$Vacref by feedback control for setting deviation $\Delta$Q to less than or equal to a specified value (for example, 0). When voltage adjustment unit 91 selects the automatic voltage adjustment mode, voltage adjustment unit 91 generates voltage amplitude adjustment amount $\Delta$Vacref by feedback control for setting deviation $\Delta$Vpos to less than or equal to a specified value (for example, 0). Voltage adjustment unit 91 is constituted by a PI controller, a first-order lag element, and the like.

Coordinate transformation unit 92 transforms a d-axis component of a specified voltage command value (that is, a specified d-axis voltage command value Vdx) and a q-axis component thereof (that is, a specified q-axis voltage command value Vqx), into an amplitude |V| and a phase $\phi$v. Specified d-axis voltage command value Vdx and specified q-axis voltage command value Vqx are values preset by the system operator or the like. Adder 93 adds amplitude |V| and voltage amplitude adjustment amount $\Delta$Vacref. Coordinate transformation unit 94 performs dq-axis transformation on amplitude |V| and phase $\phi$v, to generate reference voltage command value Vd* (that is, a d-axis component of a reference voltage command value) and reference voltage command value Vq* (that is, a q-axis component of the reference voltage command value).

Referring again to Fig. 4, voltage command generation unit 50 generates a voltage command value for controlling first active power on a DC side transmitted and received between DC circuit 4 and power converter 6 and controlling second active power on an AC side transmitted and received between AC system 2 and power converter 6, based on output DC current Idc of power converter 6, DC current command value Idc*, reference voltage command values Vd* and Vq* of the output AC voltage of power converter 6, reference phase θc0, and reference phase correction value Δθc. Specifically, voltage command generation unit 50 includes a DC current control unit 51, an adder 52, a coordinate transformation unit 53, and a command value generation unit 54.

DC current control unit 51 generates a DC voltage command value Vdc* for controlling the first active power on the DC side, based on DC current command value Idc* and output DC current Idc. Specifically, DC current control unit 51 generates DC voltage command value Vdc* such that output DC current Idc follows DC current command value Idc*. With such DC voltage command value Vdc*, output DC current Idc is controlled to follow DC current command value Idc*, and as a result, the first active power on the DC side is appropriately controlled. DC current control unit 51 may be constituted as a PI controller, a PID controller, or another controller used for feedback control, for example.

Adder 52 adds reference phase θc0 and reference phase correction value Δθc to output reference phase θc. That is, reference phase θc is obtained by correcting reference phase θc0 using reference phase correction value Δθc. Accordingly, a control amount required for controlling the second active power on the AC side and a control amount required for controlling the capacitor voltage are reflected in reference phase θc.

Coordinate transformation unit 53 generates an AC voltage command value Vac* for controlling the second active power on the AC side, based on reference phase θc and reference voltage command values Vd* and Vq*. Specifically, coordinate transformation unit 53 performs two-phase/three-phase transformation on reference voltage command values Vd* and Vq* on d-q axes using reference phase θc, to generate three-phase AC voltage command values Vacu*, Vacv*, and Vacw* (that is, AC voltage command value Vac*). Accordingly, coordinate transformation unit 53 functions as an "AC voltage command generation unit" to generate AC voltage command value Vac*.

As described above, AC voltage command value Vac* is generated using reference phase θc in which the control amount required for controlling the active power on the AC side and the control amount required for controlling the capacitor voltage are reflected. Accordingly, with such AC voltage command value Vac*, the second active power on the AC side is appropriately controlled, and the capacitor voltage is also appropriately controlled.

Command value generation unit 54 generates a voltage command value Vcnv* based on DC voltage command value Vdc* and AC voltage command value Vac*. Typically, command value generation unit 54 generates voltage command values for the positive-side arm and the negative-side arm of each phase, based on AC voltage command values Vacu*, Vacv*, and Vacw* and DC voltage command value Vdc*. Specifically, for the U phase, a voltage command value for positive-side arm 13u of the U phase is a value obtained by subtracting AC voltage command value Vacu* from DC voltage command value Vdc*. A voltage command value for negative-side arm 14u of the U phase is a value obtained by adding AC voltage command value Vacu* to DC voltage command value Vdc*. Voltage command values for the positive-side arm and the negative-side arm of each of the V phase and the W phase are similarly generated. Command value generation unit 54 generates voltage command values Vucnv*, Vvcnv*, and Vwcnv* (that is, voltage command value Vcnv*) for converter cells 1 of the respective phases, based on the voltage command values for the positive-side arms and the negative-side arms of the respective phases.

Signal generation unit 58 generates a control signal for power converter 6 based on voltage command value Vcnv*. Specifically, signal generation unit 58 performs pulse width modulation (PWM) control that is based on voltage command values Vucnv*, Vvenv*, and Vwcnv*, to generate a gate signal GP for controlling on/off driving of switching elements 31 of each converter cell 1 of each phase.

For example, a method of generating voltage command value Vucnv* for each converter cell of the U phase will be described. Signal generation unit 58 generates a PWM modulation signal by voltage comparison between voltage command value Vucnv* and a carrier signal CS from a carrier generator (not shown). Carrier signal CS is constituted by a periodic signal such as a triangular wave.

When the voltage of voltage command value Vucnv* is higher than the voltage of carrier signal CS, the PWM modulation signal is set to a high level. Conversely, when the voltage of carrier signal CS is higher than outputted voltage command value Vucnv*, the PWM modulation signal is set to a low level. Carrier signal CS is generated so as to mutually shift the timing of the PWM signal among N converter cells 1 of each phase, to achieve phase shift PWM control.

Signal generation unit 58 also generates voltage command value Vvcnv* for each converter cell 1 of the V phase and voltage command value Vwcnv* for each converter cell 1 of the W phase, in the same manner as described above. Thereby, signal generation unit 58 generates gate signal GP for controlling on/off of each of switching elements 31 included in converter cell 1, based on the PWM modulation signal. Each switching element 31 of each converter cell 1 is on/off driven according to gate signal GP.

<Advantages>

According to the first embodiment, DC voltage command value Vdc* is generated such that output DC current Idc follows DC current command value Idc* generated by active power control unit 40. Thereby, the first active power on the DC side is appropriately controlled. Further, AC voltage command value Vac* is generated using reference phase θc that is based on reference phase θc0 generated by active power control unit 40 and reference phase correction value Δθc generated by capacitor voltage control unit 45. Thereby, the second active power on the AC side and the capacitor voltage are appropriately controlled. Accordingly, by appropriately controlling the active power on the DC side and the active power on the AC side, power converter 6 can continue a stable operation.

Furthermore, even when it is not possible to transmit and receive power on the DC side due to a failure of the power storage element included in DC circuit 4 or the like, the capacitor voltage can be controlled by transmitting and receiving power on the AC side, and thus power converter 6 can continue a stable operation.

Second Embodiment.

<Functional Configuration of Control Device>

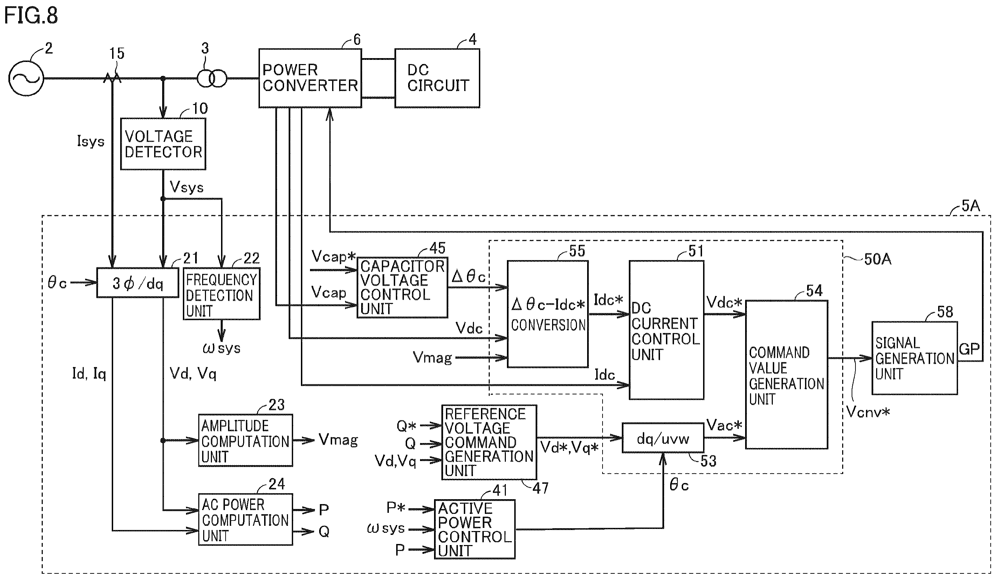

Fig. 8 is a diagram showing an example of a functional configuration of a control device 5A according to the second embodiment. While control device 5A corresponds to control device 5 in Fig. 1, a symbol "A" is added thereto for convenience, in order to distinguish it from control device 5 according to the first embodiment. This also applies to the third embodiment described below.

Referring to Fig. 8, control device 5A includes coordinate transformation unit 21, frequency detection unit 22, an amplitude computation unit 23, AC power computation unit 24, an active power control unit 41, capacitor voltage control unit 45, reference voltage command generation unit 47, a voltage command generation unit 50A, and signal generation unit 58. Of these components, the components other than amplitude computation unit 23, active power control unit 41, and voltage command generation unit 50A are the same as those described in Fig. 4, and thus the detailed description thereof will not be repeated.

Amplitude computation unit 23 computes a voltage amplitude Vmag, which is an amplitude of d-axis voltage Vd and q-axis voltage Vq. Specifically, amplitude computation unit 23 removes a high frequency component of d-axis voltage Vd and q-axis voltage Vq using a moving average filter or the like, and computes a root-sum-square of resultant d-axis voltage Vd and q-axis voltage Vq (that is, $(Vd^2+Vq^2)^{1/2}$). Amplitude computation unit 23 outputs the root-sum-square as voltage amplitude Vmag of the output AC voltage of power converter 6.

Active power control unit 41 generates reference phase θc based on active power detection value P, active power command value P*, and system angular frequency ωsys of AC system 2. The second embodiment differs from the first embodiment in that the reference phase generated by active power control unit 41 is referred to as "θc" (that is, the reference phase is not corrected using reference phase correction value Δθc).

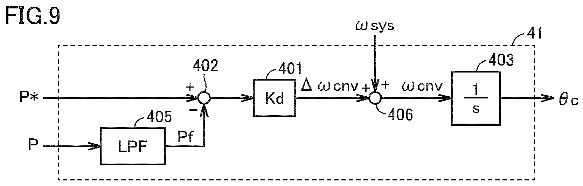

Fig. 9 is a diagram showing a first exemplary configuration of active power control unit 41 according to the second embodiment. Referring to Fig. 9, active power control unit 41 generates reference phase θc by the droop control method, based on active power detection value P, active power command value P*, and system angular frequency ωsys of AC system 2. Specifically, active power control unit 41 according to the first exemplary configuration includes proportioner 401, subtractor 402, integrator 403, low pass filter 405, and adder 406. That is, active power control unit 41 according to the first exemplary configuration has a configuration obtained by deleting divider 404 from active power control unit 40 according to the first exemplary configuration shown in Fig. 5.

Since the functions of proportioner 401, subtractor 402, integrator 403, low pass filter 405, and adder 406 are the same as those described in Fig. 5, the detailed description thereof will not be repeated. It should be noted that integrator 403 of active power control unit 41 outputs reference phase θc.

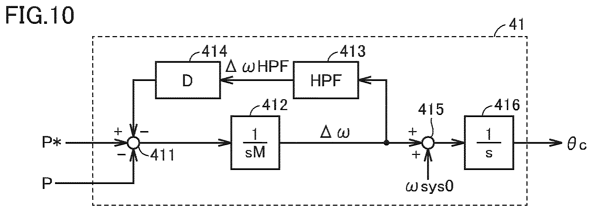

Fig. 10 is a diagram showing a second exemplary configuration of active power control unit 41 according to the second embodiment. Referring to Fig. 10, active power control unit 41 according to the second exemplary configuration generates reference phase θc by simulating the characteristics of the synchronous power generator based on active power detection value P and active power command value P*. Specifically, active power control unit 41 according to the second exemplary configuration includes adder-subtractor 411, integrator 412, high pass filter 413, proportioner 414, adder 415, and integrator 416. That is, active power control unit 41 according to the second exemplary configuration has a configuration obtained by deleting divider 404 from active power control unit 40 according to the second exemplary configuration shown in Fig. 6.

Since the functions of adder-subtractor 411, integrator 412, high pass filter 413, proportioner 414, adder 415, and integrator 416 are the same as those described in Fig. 6, the detailed description thereof will not be repeated. It should be noted that integrator 416 of active power control unit 41 outputs reference phase θc.

Referring again to Fig. 8, voltage command generation unit 50A generates a voltage command value for controlling the first active power on the DC side and controlling the second active power on the AC side, based on output DC current Idc, reference voltage command values Vd* and Vq*, reference phase θc, and DC current command value Idc* obtained by converting reference phase correction value Δθc. Specifically, voltage command generation unit 50A includes DC current control unit 51, coordinate transformation unit 53, command value generation unit 54, and a phase transformation unit 55.

Since the functions of DC current control unit 51, coordinate transformation unit 53, and command value generation unit 54 are the same as those described in Fig. 4, the detailed description thereof will not be repeated.

Phase transformation unit 55 generates DC current command value Idc*, based on reference phase correction value Δθc, output DC voltage Vdc, and voltage amplitude Vmag, which is an amplitude value of the output AC voltage of power converter 6.

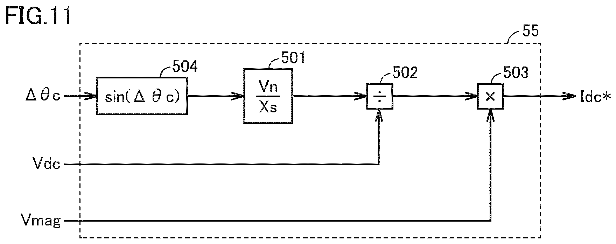

Fig. 11 is a diagram showing an exemplary configuration of phase transformation unit 55 according to the second embodiment. Referring to Fig. 11, phase transformation unit 55 includes a computation element 501, a divider 502, a multiplier 503, and a sine computation element 504.

Sine computation element 504 generates sin(Δθc) based on reference phase correction value Δθc. Computation element 501 computes a multiplication value obtained by multiplying a value obtained by dividing a rated voltage Vn of AC system 2 by an inductance Xs of power converter 6 (that is, Vn/Xs), by sin(Δθc) (that is, sin(Δθc)×Vn/Xs). Divider 502 outputs a value obtained by dividing the value outputted from computation element 501 by output DC voltage Vdc (that is, sin(Δθc)×Vn/(Xs×Vdc)). Multiplier 503 outputs a value obtained by multiplying the value outputted from divider 502 by voltage amplitude Vmag (that is, Vmag×sin(Δθc)×Vn/(Xs×Vdc)), as DC current command value Idc*.

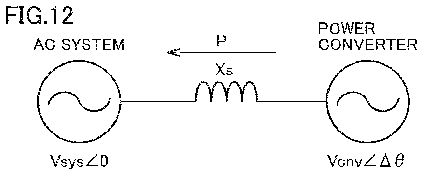

Fig. 12 is a diagram for illustrating a system of conversion from the reference phase correction value to the DC current command value. Referring to Fig. 12, P indicates the active power outputted from power converter 6, Vsys indicates the AC voltage of AC system 2, Vcnv indicates the output AC voltage of power converter 6, Δθ indicates a phase difference between the AC voltage of AC system 2 and the output AC voltage of power converter 6, and Xs indicates the inductance of power converter 6. In this case, the following equation (2) is established.

[Math. 1]

$$P = V_{dc}I_{dc} = \frac{V_{sys}V_{cnv}}{X_s}sin(\Delta\theta) \qquad \cdots(2)$$

When the equation (2) is transformed, output DC current Idc is expressed by the following equation (3).

[Math. 2]

$$I_{dc} = \frac{P}{V_{dc}} = \frac{V_{sys}V_{cnv}}{X_s}\frac{1}{V_{dc}}sin(\Delta\theta) \qquad \cdots(3)$$

Here, when it is assumed that "AC voltage Vsys = rated voltage Vn" and "output AC voltage Vcnv = voltage amplitude Vmag", the following equation (4) is established.

[Math. 3]

$$I_{dc} = \frac{P}{V_{dc}} = \frac{V_nV_{mag}}{X_s}\frac{1}{V_{dc}}sin(\Delta\theta) \qquad \cdots(4)$$

Therefore, DC current command value Idc* is computed by the configuration of phase transformation unit 55 in Fig. 11. By such conversion processing, the control amount required for controlling the capacitor voltage by capacitor voltage control unit 45 (for example, reference phase correction value Δθc) can be reflected in DC current command value Idc*.

Referring again to Fig. 8, DC current control unit 51 generates DC voltage command value Vdc* such that output DC current Idc follows DC current command value Idc*. With such DC voltage command value Vdc*, output DC current Idc is controlled to follow DC current command value Idc*, and as a result, the first active power on the DC side is appropriately controlled.

Furthermore, DC current command value Idc* is obtained by converting reference phase correction value Δθc generated by capacitor voltage control unit 45. Accordingly, the control amount required for controlling the capacitor voltage is reflected in DC current command value Idc*. Therefore, with such DC voltage command value Vdc*, the capacitor voltage is also appropriately controlled.

Coordinate transformation unit 53 generates AC voltage command value Vac* for controlling the second active power on the AC side, based on reference phase θc generated by active power control unit 41, and reference voltage command values Vd* and Vq*. AC voltage command value Vac* is generated using reference phase θc in which the control amount required for controlling the active power is reflected. Accordingly, with such AC voltage command value Vac*, the second active power on the AC side is appropriately controlled.

Command value generation unit 54 generates voltage command value Vcnv* based on DC voltage command value Vdc* and AC voltage command value Vac*. Signal generation unit 58 generates gate signal GP for power converter 6 based on voltage command value Vcnv*.

<Advantages>

According to the second embodiment, DC voltage command value Vdc* is generated such that output DC current Idc follows DC current command value Idc* obtained by converting reference phase correction value Δθc generated by capacitor voltage control unit 45. Thereby, the first active power on the DC side and the capacitor voltage are appropriately controlled. Further, AC voltage command value Vac* is generated using reference phase θc generated by active power control unit 41. Thereby, the second active power on the AC side is appropriately controlled. Accordingly, by appropriately controlling the active power on the DC side and the active power on the AC side, power converter 6 can continue a stable operation.

Furthermore, even when it is not possible to transmit and receive power on the AC side due to a voltage drop caused by a system accident in AC system 2 or the like, the capacitor voltage can be controlled by transmitting and receiving power on the DC side, and thus power converter 6 can continue a stable operation.

Third Embodiment.

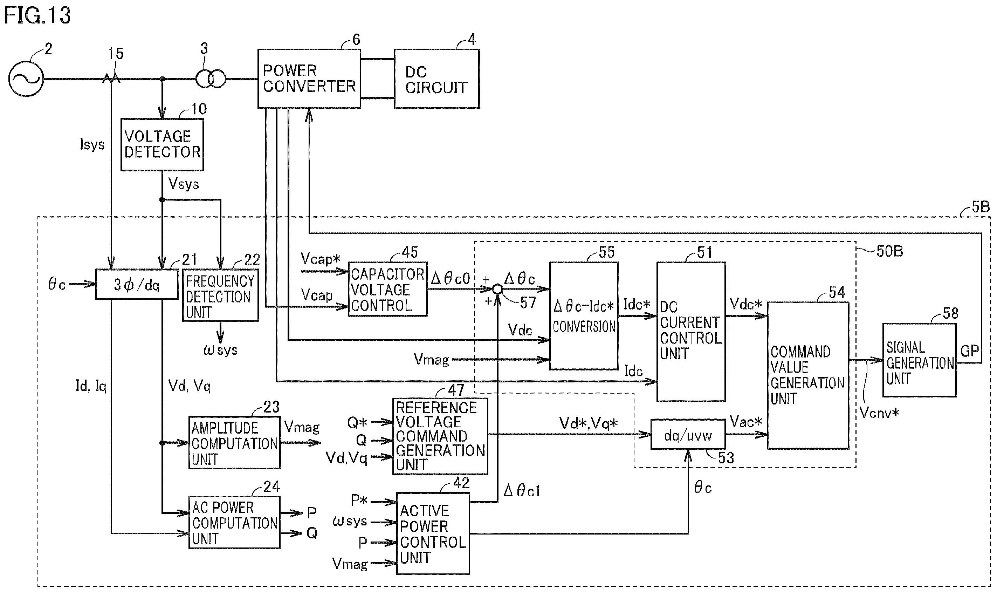

Fig. 13 is a diagram showing an example of a functional configuration of a control device 5B according to the third embodiment. Referring to Fig. 13, control device 5B includes coordinate transformation unit 21, frequency detection unit 22, amplitude computation unit 23, AC power computation unit 24, an active power control unit 42, capacitor voltage control unit 45, reference voltage command generation unit 47, a voltage command generation unit 50B, and signal generation unit 58. Of these components, the components other than active power control unit 42 and voltage command generation unit 50B are the same as those described in Fig. 8, and thus the detailed description thereof will not be repeated. It should be noted that, in the third embodiment, a reference phase correction value outputted from capacitor voltage control unit 45 is referred to as "Δθc0", for convenience of description.

Active power control unit 42 generates reference phase θc based on active power detection value P, active power command value P*, and system angular frequency ωsys of AC system 2. In this regard, active power control unit 42 is the same as active power control unit 41 according to the second embodiment. On the other hand, active power control unit 42 further computes a phase adjustment amount that is based on the detection value of the active power outputted from power converter 6 to AC system 2, using active power detection value P and voltage amplitude Vmag of the output AC voltage of power converter 6.

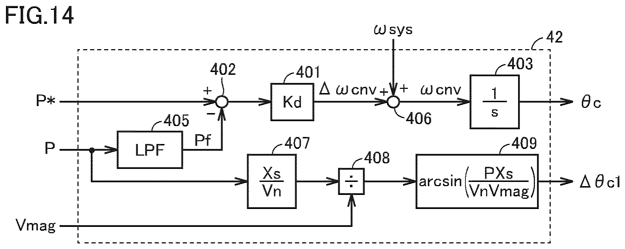

Fig. 14 is a diagram showing a first exemplary configuration of active power control unit 42 according to the third embodiment. Referring to Fig. 14, active power control unit 42 generates reference phase θc by the droop control method, based on active power detection value P, active power command value P*, and system angular frequency ωsys of AC system 2. Specifically, active power control unit 42 according to the first exemplary configuration includes proportioner 401, subtractor 402, integrator 403, low pass filter 405, adder 406, a computation element 407, a divider 408, and an arcsine computation element 409. That is, active power control unit 42 according to the first exemplary configuration has a configuration obtained by adding computation element 407, divider 408, and arcsine computation element 409 to active power control unit 41 according to the first exemplary configuration shown in Fig. 9.

Since the functions of proportioner 401, subtractor 402, integrator 403, low pass filter 405, and adder 406 are the same as those described in Fig. 5, the detailed description thereof will not be repeated. It should be noted that integrator 403 of active power control unit 42 outputs reference phase θc.

Computation element 407 outputs a multiplication value obtained by multiplying a value obtained by dividing inductance Xs of power converter 6 by rated voltage Vn of AC system 2 (that is, Xs/Vn), by active power detection value P (that is, P×Xs/Vn). Divider 408 outputs a value obtained by dividing the output value of computation element 407 by voltage amplitude Vmag of the output AC voltage of power converter 6 (that is, P×Xs/(Vn×Vmag)). Arcsine computation element 409 generates arcsin(P×Xs/(Vn×Vmag)) computed based on the output value of divider 408, as a phase adjustment amount Δθc1.

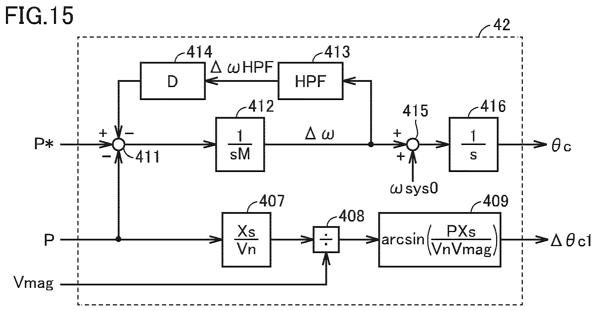

Fig. 15 is a diagram showing a second exemplary configuration of active power control unit 42 according to the third embodiment. Referring to Fig. 15, active power control unit 42 according to the second exemplary configuration generates reference phase θc by simulating the characteristics of the synchronous power generator based on active power detection value P and active power command value P*. Specifically, active power control unit 42 according to the second exemplary configuration includes computation element 407, divider 408, arcsine computation element 409, adder-subtractor 411, integrator 412, high pass filter 413, proportioner 414, adder 415, and integrator 416. That is, active power control unit 42 according to the second exemplary configuration has a configuration obtained by adding computation element 407, divider 408, and arcsine computation element 409 to active power control unit 41 according to the second exemplary configuration shown in Fig. 10.

Since the functions of adder-subtractor 411, integrator 412, high pass filter 413, proportioner 414, adder 415, and integrator 416 are the same as those described in Fig. 6, the detailed description thereof will not be repeated. It should be noted that integrator 416 of active power control unit 42 outputs reference phase $\theta c$. Further, the functions of computation element 407, divider 408, and arcsine computation element 409 are the same as those described in Fig. 14. Accordingly, phase adjustment amount $\Delta\theta c1$ is generated by the same procedure as described above.

Referring again to Fig. 13, voltage command generation unit 50B generates a voltage command value for controlling the first active power on the DC side and controlling the second active power on the AC side, based on output DC current Idc, reference voltage command values Vd* and Vq*, reference phase $\theta c$, and DC current command value Idc* obtained by converting reference phase correction value $\Delta\theta c$. Specifically, voltage command generation unit 50B includes DC current control unit 51, coordinate transformation unit 53, command value generation unit 54, phase transformation unit 55, and an adder 57. That is, voltage command generation unit 50B has a configuration obtained by adding adder 57 to voltage command generation unit 50A shown in Fig. 8.

Adder 57 generates an addition value obtained by adding reference phase correction value $\Delta\theta c0$ outputted from capacitor voltage control unit 45 and phase adjustment amount $\Delta\theta c1$ outputted from active power control unit 42, as reference phase correction value $\Delta\theta c$. In this way, phase adjustment amount $\Delta\theta c1$ is fed forward to reference phase correction value $\Delta\theta c0$ that is based on control of the capacitor voltage. Therefore, in the third embodiment, a phase correction amount required for controlling the capacitor voltage and the phase adjustment amount computed based on the detection value of the active power outputted from power converter 6 to AC system 2 are reflected in reference phase correction value $\Delta\theta c$.

In the case of the configuration of voltage command generation unit 50A according to the second embodiment shown in Fig. 8, only the reference phase correction value calculated by controlling the capacitor voltage by capacitor voltage control unit 45 is reflected in DC current command value Idc*. On the other hand, in the case of the configuration in Fig. 13, not only reference phase correction value $\Delta\theta c0$ calculated by controlling the capacitor voltage but also phase adjustment amount $\Delta\theta c1$ computed by active power control unit 42 are reflected in DC current command value Idc*.

Phase transformation unit 55 converts reference phase correction value $\Delta\theta c$, which is an addition value obtained by adding reference phase correction value $\Delta\theta c0$ and phase adjustment amount $\Delta\theta c1$, into DC current command value Idc*, and outputs it to DC current control unit 51. DC current control unit 51 generates DC voltage command value Vdc* such that output DC current Idc follows DC current command value Idc*. With such DC voltage command value Vdc*, output DC current Idc is controlled to follow DC current command value Idc*, and as a result, the first active power on the DC side is appropriately controlled.

Furthermore, DC current command value Idc* is obtained by converting reference phase correction value $\Delta\theta c$, which is an addition value obtained by adding reference phase correction value $\Delta\theta c0$ and phase adjustment amount $\Delta\theta c1$. Accordingly, the control amount required for controlling the capacitor voltage and the phase adjustment amount that is based on the detection value of the active power on the AC side are reflected in DC current command value Idc*. Therefore, with such DC voltage command value Vdc*, the capacitor voltage can be controlled more appropriately.

Coordinate transformation unit 53 generates AC voltage command value Vac* for controlling the second active power on the AC side, based on reference phase $\theta c$ and reference voltage command values Vd* and Vq*. With such AC voltage command value Vac*, the second active power on the AC side is appropriately controlled.

Command value generation unit 54 generates voltage command value Vcnv* based on DC voltage command value Vdc* and AC voltage command value Vac*. Signal generation unit 58 generates gate signal GP for power converter 6 based on voltage command value Vcnv*.

<Advantages>

The third embodiment has the following advantages, in addition to the advantages of the second embodiment. Specifically, phase adjustment amount $\Delta\theta c1$ generated by active power control unit 42 is fed forward to reference phase correction value $\Delta\theta c0$, and reference phase correction value $\Delta\theta c$, which is an addition value obtained by adding them, is converted into DC current command value Idc*. Accordingly, the output value of active power control unit 42 (that is, phase adjustment amount $\Delta\theta c1$) can be quickly reflected in the control amount required for controlling the capacitor voltage. Therefore, even when there is a power difference between the first active power on the DC side and the second active power on the AC side, control of the capacitor voltage reflecting the power difference is performed, and thus fluctuation of the capacitor voltage can be suppressed, and power converter 6 can continue a stable operation.

**EP 4 683 201 A1**

Other Embodiments

(1) Although each of the embodiments described above has described the configuration in which power converter 6 is a modular multilevel converter, the present disclosure is not limited to such a configuration. For example, the circuit system of power converter 6 may be constituted by a two-level converter that converts AC power into two-level DC power, or may be constituted by a three-level converter that converts AC power into three-level DC power. It should be noted that, in this case, capacitor voltage control unit 45 generates reference phase correction value $\Delta\theta c$ based on predetermined capacitor voltage command value Vcap* and voltage Vcap of the capacitors included in power converter 6.

(2) The configuration exemplified as each of the embodiments described above is an exemplary configuration of the present disclosure, and can be combined with another known technique, or can be configured as being modified, for example, partially omitted, without departing from the gist of the present disclosure. Further, in each of the embodiments described above, the processing and the configuration described in another embodiment may be adopted and performed as appropriate.

It should be understood that the embodiments disclosed herein are illustrative and non-restrictive in every respect. The scope of the present disclosure is defined by the scope of the claims, rather than the description above, and is intended to include any modifications within the scope and meaning equivalent to the scope of the claims.

REFERENCE SIGNS LIST

1: converter cell; 2: AC system; 3: voltage transformer; 4: DC circuit; 5, 5A, 5B: control device; 6: power converter; 7a, 7b: reactor; 8u, 8v, 8w: leg circuit; 9a, 9b: arm current detector; 10: AC voltage detector; 11a, 11b: DC voltage detector; 13u, 13v, 13w: positive-side arm; 14u, 14v, 14w: negative-side arm; 15: AC current detector; 21, 53, 92, 94: coordinate transformation unit; 22: frequency detection unit; 23: amplitude computation unit; 24: AC power computation unit; 31: switching element; 32: capacitor; 33: voltage detector; 36: positive phase voltage calculation unit; 40, 41, 42: active power control unit; 45: capacitor voltage control unit; 47: reference voltage command generation unit; 50, 50A, 50B: voltage command generation unit; 51: DC current control unit; 54: command value generation unit; 55: phase transformation unit; 58: signal generation unit; 70: input converter; 71: sample hold circuit; 72: multiplexer; 73: A/D converter; 74: CPU; 75: RAM; 76: ROM; 77: input/output interface; 78: auxiliary storage device; 79: bus; 91: voltage adjustment unit; 100: power conversion device.

**Claims**

1.  A power conversion device comprising:

    a power converter to perform power conversion between an AC system and a DC circuit; and
    a control device to control the power converter,
    the control device including

    an active power control unit to generate a reference phase of an output AC voltage of the power converter, based on an active power detection value of the AC system, an active power command value, and a system frequency of the AC system,
    a capacitor voltage control unit to generate a reference phase correction value for correcting the reference phase, based on a capacitor voltage command value and a voltage of a capacitor included in the power converter,
    a voltage command generation unit to generate a voltage command value for controlling first active power transmitted and received between the DC circuit and the power converter and controlling second active power transmitted and received between the AC system and the power converter, based on an output DC current of the power converter, a DC current command value, a reference voltage command value of the output AC voltage of the power converter, the reference phase, and the reference phase correction value, and
    a signal generation unit to generate a control signal for the power converter based on the voltage command value.

2. The power conversion device according to claim 1, wherein

the active power control unit generates the DC current command value, based on the active power detection value and an output DC voltage of the power converter, and
the voltage command generation unit includes

a DC current control unit to generate a DC voltage command value for controlling the first active power, based on the DC current command value and the output DC current, and
an AC voltage command generation unit to generate an AC voltage command value for controlling the second active power, based on the reference phase corrected using the reference phase correction value, and the reference voltage command value.

3. The power conversion device according to claim 1, wherein
the voltage command generation unit includes

a DC current command generation unit to generate the DC current command value, based on the reference phase correction value, an output DC voltage of the power converter, and an amplitude value of an AC voltage of the AC system,
a DC current control unit to generate a DC voltage command value for controlling the first active power, based on the DC current command value and the output DC current, and
an AC voltage command generation unit to generate an AC voltage command value for controlling the second active power, based on the reference voltage command value, and the reference phase generated by the active power control unit.

4. The power conversion device according to claim 1, wherein

the active power control unit further computes a phase adjustment amount, based on the active power detection value and an amplitude value of an AC voltage of the AC system, and
the voltage command generation unit includes

a DC current command generation unit to generate the DC current command value, based on an addition value obtained by adding the reference phase correction value and the phase adjustment amount, an output DC voltage of the power converter, and an amplitude value of the output AC voltage,
a DC current control unit to generate a DC voltage command value for controlling the first active power, based on the DC current command value and the output DC current, and
an AC voltage command generation unit to generate an AC voltage command value for controlling the second active power, based on the reference voltage command value, and the reference phase generated by the active power control unit.

5. The power conversion device according to any one of claims 2 to 4, wherein the voltage command value is generated based on the DC current command value and the AC voltage command value.

6. The power conversion device according to any one of claims 1 to 5, wherein the active power control unit generates the reference phase by a droop control method, based on the active power detection value, the active power command value, and the system frequency of the AC system.

7. The power conversion device according to any one of claims 1 to 5, wherein the active power control unit generates the reference phase by simulating characteristics of a synchronous power generator based on the active power detection value and the active power command value.

8. The power conversion device according to any one of claims 1 to 7, wherein

the power converter includes a plurality of leg circuits,
each of the leg circuits includes a plurality of converter cells cascade-connected to each other, and
each of the plurality of converter cells includes a capacitor and a switching element.

9. The power conversion device according to claim 8, wherein the capacitor voltage control unit generates the reference phase correction value such that a voltage average value of all capacitors included in the power converter follows a command value given for the voltage average value of all the capacitors.

10. The power conversion device according to any one of claims 1 to 9, wherein the DC circuit includes a power storage element connected to a DC terminal of the power converter.

11. The power conversion device according to any one of claims 1 to 9, wherein the DC circuit includes a DC terminal of another power converter connected to a DC terminal of the power converter.

FIG.1

EP 4 683 201 A1

FIG.2

(a)

(b)

FIG.3

<u>5</u>

```
                                              ┌─79
                              ┌─74            │           ┌─76
                          ┌─────────┐         │       ┌─────────┐
                          │   CPU   │─────────●───────│   ROM   │
                          └─────────┘         │       └─────────┘
                                              │
                              ┌─75            │           ┌─77
                          ┌─────────┐         │       ┌──────────┐
                          │   RAM   │─────────●───────│ INPUT/   │◄───►
                          └─────────┘         │       │OUTPUT I/F│
                                              │       └──────────┘
                                              │
                                              │          ⋮
       ┌─70        ┌─71        ┌─72       ┌─73│           ┌─78
   ┌─────────┐ ┌─────────┐ ┌─────────┐ ┌──────┐      ┌──────────┐
──►│ INPUT   │►│  S/H    │►│   MUX   │►│ A/D  │──────●│AUXILIARY │
   │CONVERTER│ └─────────┘ └─────────┘ └──────┘      │STORAGE   │
   └─────────┘                                       │DEVICE    │
                                                     └──────────┘
        ⋮          ⋮
```

FIG.4

EP 4 683 201 A1

FIG.5

FIG.6

FIG.7

Vd*, Vq*

FIG.8

FIG.9

FIG.10

FIG.11

## FIG.12

AC SYSTEM

POWER
CONVERTER

P

Xs

Vsys∠0

Vcnv∠Δθ

FIG.13

FIG.14

FIG.15

## INTERNATIONAL SEARCH REPORT

| International application No. |
| --- |
| **PCT/JP2023/010301** |

| A. | CLASSIFICATION OF SUBJECT MATTER |
| --- | --- |

*H02M 7/48*(2007.01)i
FI: H02M7/48 R

According to International Patent Classification (IPC) or to both national classification and IPC

| B. | FIELDS SEARCHED |
| --- | --- |

Minimum documentation searched (classification system followed by classification symbols)

H02M7/42-7/98

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 7209908 B1 (MITSUBISHI ELECTRIC CORPORATION) 20 January 2023 (2023-01-20)<br>entire text, all drawings | 1-11 |
| A | WO 2020/240810 A1 (TOSHIBA ENERGY SYSTEMS & SOLUTIONS CORPORATION)<br>03 December 2020 (2020-12-03)<br>entire text, all drawings | 1-11 |
| A | JP 2022-056359 A (MITSUBISHI ELECTRIC CORPORATION) 08 April 2022 (2022-04-08)<br>entire text, all drawings | 1-11 |
| A | JP 7051028 B1 (MITSUBISHI ELECTRIC CORPORATION) 08 April 2022 (2022-04-08)<br>entire text, all drawings | 1-11 |
| A | EP 2790312 A2 (GENERAL ELECTRIC COMPANY) 15 October 2014 (2014-10-15)<br>entire text, all drawings | 1-11 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **26 May 2023** | **06 June 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/010301**

| Patent document cited in search report | | | Publication date (day/month/year) | Patent family member(s) | | | Publication date (day/month/year) |
|---|---|---|---|---|---|---|---|
| JP | 7209908 | B1 | 20 January 2023 | (Family: none) | | | |
| WO | 2020/240810 | A1 | 03 December 2020 | (Family: none) | | | |
| JP | 2022-056359 | A | 08 April 2022 | (Family: none) | | | |
| JP | 7051028 | B1 | 08 April 2022 | (Family: none) | | | |
| EP | 2790312 | A2 | 15 October 2014 | US | 2014/0307494 | A1 | |
| | | | | CN | 104104221 | A | |
| | | | | CA | 2848107 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021213655 A